# EUROPÄISCHE PATENTANMELDUNG

(11) **EP 4 534 295 A1**
(43) Veröffentlichungstag der Anmeldung: **09.04.2025**
(21) Anmeldenummer: 24203001.3
(22) Anmeldetag: 26.09.2024
(51) Int. Cl.: B41J 2/165, B41J 2/21, G06K 15/02, H04N 1/60, B41J 29/393, H04N 1/407

(54) **VERFAHREN UND VERARBEITUNGSEINHEIT ZUR VORHERSAGE EINER WARTUNGSSITUATION**

(30) Priorität: 06.10.2023 DE 102023127229
(71) Anmelder: Canon Production Printing Holding B.V., 5914 HH Venlo (NL)
(72) Erfinder: SCHNEIDER, Claus, 5914HH Venlo (NL); HITZLSPERGER, Florian, 5914HH Venlo (NL); RUMMELSBERGER, Christoph, 5914HH Venlo (NL); STÖCKLE, Ulrich, 5914HH Venlo (NL)
(74) Vertreter: Canon Production Printing IP Department

(57) **Zusammenfassung**

Es wird eine Verarbeitungseinheit (101) für eine Tintenstrahl-Druckvorrichtung (100) beschrieben, die eingerichtet ist, auf Basis einer zeitlichen Sequenz von Test-Druckbildern (200), aus denen die zeitliche Entwicklung der Anzahl (210) von fehlerhaften Düsen (21, 22) hervorgeht, die verbleibende Zeitdauer (223) bis zum Vorliegen einer Wartungssituation zu prädizieren. Die Druckvorrichtung (100) kann dann in optimierter Weise unter Berücksichtigung der prädizierten Zeitdauer (223) betrieben werden.

## Beschreibung

Die Erfindung betrifft ein Verfahren und eine entsprechende Verarbeitungseinheit, die eine präzise Vorhersage einer Wartungssituation einer Tintenstrahl-Druckvorrichtung ermöglichen, um die Druckqualität und die Betriebseffizienz der Druckvorrichtung zu erhöhen.

Eine Tintenstrahl-Druckvorrichtung zum Bedrucken eines Aufzeichnungsträgers weist zumindest einen Druckriegel mit ein oder mehreren Druckköpfen mit jeweils ein oder mehreren Düsen auf. Die Düsen sind jeweils eingerichtet, Tintentropfen auszustoßen, um Bildpunkte eines Druckbildes auf den Aufzeichnungsträger zu drucken. Dabei werden der Druckriegel und der Aufzeichnungsträger relativ zueinander bewegt, um Bildpunkte an unterschiedlichen Positionen, insbesondere in unterschiedlichen Zeilen, auf den Aufzeichnungsträger zu drucken, und um so ein Druckbild auf den Aufzeichnungsträger zu drucken.

Durch verschiedene Einflüsse kann es mit der Zeit zu Ausfällen von einzelnen Düsen kommen, wobei einzelne ausgefallene Düsen durch ein oder mehrere Kompensationsmaßnahmen zumindest teilweise kompensiert werden können. Die Anzahl von Düsenausfällen, die kompensiert werden können, ist typischerweise auf eine maximal zulässige Anzahl von Düsenausfällen begrenzt. Bei Vorliegen einer zu hohen Anzahl von Düsenausfällen muss daher meist eine Wartung der Tintenstrahl-Druckvorrichtung durchgeführt werden, bei der z.B. eine Reinigung und/oder eine Regenerierung der ein oder mehreren Druckköpfe des Druckriegels erfolgt.

Das Unterbrechen eines Druckauftrags zur Durchführung der Wartung des Druckriegels kann zu einer Beeinträchtigung der Druckeffizienz und/oder der Druckqualität der Tintenstrahl-Druckvorrichtung führen.

Das vorliegende Dokument befasst sich mit der technischen Aufgabe, die Druckeffizienz und/oder die Druckqualität einer Tintenstrahl-Druckvorrichtung bei Vorliegen von Düsenausfällen in zuverlässiger Weise zu erhöhen. Die Aufgabe wird jeweils durch die Merkmale des Vorrichtungsanspruchs 1 sowie durch die Merkmale des Verfahrensanspruchs 10 gelöst.

Gemäß einem Aspekt wird eine Verarbeitungseinheit für eine Tintenstrahl-Druckvorrichtung beschrieben, die zumindest einen Druckriegel mit einer Vielzahl von Düsen umfasst, wobei die Vielzahl von Düsen eingerichtet ist, Bildpunkte in einer entsprechenden Vielzahl von Spalten eines Druckbildes auf einen Aufzeichnungsträger zu drucken. Die Verarbeitungseinheit ist eingerichtet, den Druckriegel zu veranlassen, an einer Sequenz von aufeinanderfolgenden Zeitpunkten eine entsprechende Sequenz von Test-Druckbildern auf den Aufzeichnungsträger zu drucken, und die auf den Aufzeichnungsträger gedruckten Test-Druckbilder jeweils sensorisch zu erfassen, um eine Sequenz von erfassten Test-Druckbildern bereitzustellen. Die Verarbeitungseinheit ist ferner eingerichtet, auf Basis der Sequenz von erfassten Test-Druckbildern eine verbleibende Zeitdauer bis zu einer Wartungssituation zu prädizieren, bei der eine Wartung des Druckriegels durchzuführen ist, und die Druckvorrichtung in Abhängigkeit von der prädizierten verbleibenden Zeitdauer zu betreiben.

Gemäß einem weiteren Aspekt wird ein Verfahren zum Betrieb einer Tintenstrahl-Druckvorrichtung beschrieben, die zumindest einen Druckriegel mit einer Vielzahl von Düsen umfasst, wobei die Vielzahl von Düsen eingerichtet ist, Bildpunkte in einer entsprechenden Vielzahl von Spalten eines Druckbildes auf einen Aufzeichnungsträger zu drucken. Das Verfahren umfasst das Bewirken, dass der Druckriegel an einer Sequenz von aufeinanderfolgenden Zeitpunkten eine entsprechende Sequenz von Test-Druckbildern auf den Aufzeichnungsträger druckt, und das Erfassen der auf den Aufzeichnungsträger gedruckten Test-Druckbilder, um eine Sequenz von erfassten Test-Druckbildern bereitzustellen. Das Verfahren umfasst ferner das Prädizieren, auf Basis der Sequenz von erfassten Test-Druckbildern, einer verbleibenden Zeitdauer bis zu einer Wartungssituation, bei der eine Wartung des Druckriegels durchzuführen ist, und das Betreiben der Druckvorrichtung in Abhängigkeit von der prädizierten verbleibenden Zeitdauer.

Im Weiteren werden Ausführungsbeispiele der Erfindung anhand der schematischen Zeichnung näher beschrieben. Dabei zeigen:
- Fig. 1: ein Blockdiagramm einer beispielhaften Tintenstrahl-Druckvorrichtung;
- Fig. 2a: ein beispielhaftes Test-Druckbild;
- Fig. 2b: einen beispielhaften zeitlichen Verlauf der Anzahl von ausgefallenen Düsen; und
- Fig. 3: ein Ablaufdiagramm eines beispielhaften Verfahrens zum Betrieb einer Druckvorrichtung.

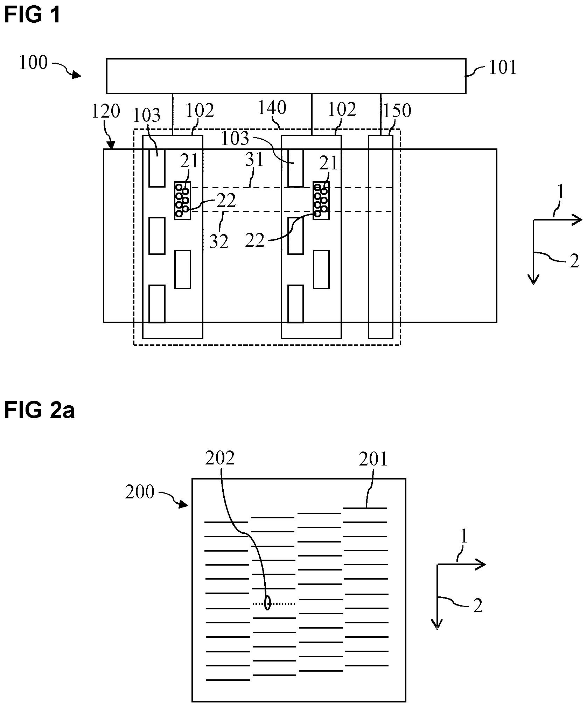

Die in Fig. 1 dargestellte Druckvorrichtung 100 ist für den Druck auf einen bogen- oder blatt- oder plattenförmigen oder bandförmigen Aufzeichnungsträger 120 ausgelegt. Der Aufzeichnungsträger 120 kann aus Papier, Pappe, Karton, Metall, Kunststoff, Textilien, einer Kombination davon und/oder sonstigen geeigneten und bedruckbaren Materialien hergestellt sein. Der Auszeichnungsträger 120 wird entlang der Transportrichtung 1, dargestellt durch einen Pfeil, durch das Druckwerk 140 der Druckvorrichtung 100 geführt.

Das Druckwerk 140 der Druckvorrichtung 100 umfasst in dem dargestellten Beispiel zwei Druckriegel 102, wobei jeder Druckriegel 102 für das Drucken mit Tinte einer bestimmten Farbe verwendet werden kann, z.B. Schwarz, Cyan, Magenta und/oder Gelb und ggf. MICR-Tinte. Unterschiedliche Druckriegel 102 können für das Drucken mit jeweils unterschiedlichen Tinten verwendet werden. Des Weiteren kann das Druckwerk 140 zumindest eine Sensoreinheit 150, z.B. eine Kamera, umfassen, die eingerichtet ist, Sensordaten in Bezug auf ein auf den Aufzeichnungsträger 120 gedrucktes Druckbild zu erfassen.

Ein Druckriegel 102 kann ein oder mehrere Druckköpfe 103 umfassen, die ggf. in mehreren Reihen nebeneinander angeordnet sind, um die Bildpunkte unterschiedlicher Spalten 31, 32 eines Druckbildes auf den Aufzeichnungsträger 120 zu drucken. In dem in Fig. 1 dargestellten Beispiel umfasst ein Druckriegel 102 fünf Druckköpfe 103, wobei jeder Druckkopf 103 die Bildpunkte einer Gruppe von Spalten 31, 32 eines Druckbildes auf den Aufzeichnungsträger 120 druckt. Die unterschiedlichen Spalten 31, 32 eines Druckbildes sind entlang der Querrichtung 2 nebeneinander angeordnet. Des Weiteren verlaufen die einzelnen Spalten 31, 32 jeweils entlang der Transportrichtung 1.

Jeder Druckkopf 103 des Druckwerks 140 umfasst in der in Fig. 1 abgebildeten Ausführungsform mehrere Düsen 21, 22, wobei jede Düse 21, 22 eingerichtet ist, Tintentropfen auf den Aufzeichnungsträger 120 zu feuern oder zu stoßen. Ein Druckkopf 103 des Druckwerks 140 kann beispielsweise mehrere Tausend effektiv genutzte Düsen 21, 22 umfassen, die entlang mehrerer Reihen quer zur Transportrichtung 1, d.h. entlang der Querrichtung 2, des Aufzeichnungsträgers 120 angeordnet sind. Mittels der Düsen 21, 22 eines Druckkopfs 103 bzw. eines Druckriegels 102 des Druckwerks 140 können Bildpunkte einer Zeile eines Druckbildes auf den Aufzeichnungsträger 120 quer zur Transportrichtung 1, d.h. entlang der Breite des Aufzeichnungsträgers 120, gedruckt werden.

Die Druckvorrichtung 100 umfasst ferner eine Steuer- bzw. Verarbeitungseinheit 101, z.B. eine Ansteuer-Hardware und/oder einen Controller, die eingerichtet ist, die Aktuatoren der einzelnen Düsen 21, 22 der einzelnen Druckköpfe 103 des Druckwerks 140 anzusteuern, um in Abhängigkeit von Druckdaten ein Druckbild auf den Aufzeichnungsträger 120 aufzubringen.

Wie eingangs dargelegt, kann es im Laufe des Betriebs der Druckvorrichtung 100 zu einer Beeinträchtigung von einzelnen Düsen 21, 22 eines Druckkopfes 103 bzw. eines Druckriegels 102 kommen. Insbesondere kann es mit der Zeit zu Totalausfällen von einzelnen Düsen 21, 22 kommen.

Um den Zustand der einzelnen Düsen 21, 22 der Druckvorrichtung 100 zu bestimmen, kann, wie beispielhaft in Fig. 2a dargestellt, ein Test-Druckbild 200 mit einem Testmuster gedruckt werden. Das Testmuster kann einzelne Linien 201 umfassen, wobei jede Linie 201 jeweils genau durch eine einzige Düse 21, 22 gedruckt wird. Es kann somit jede einzelne Düse 21, 22 der Druckvorrichtung 100 veranlasst werden, genau eine Linie 201 zu drucken. Das Test-Druckbild 200 mit dem Testmuster kann durch die Sensoreinheit 150 erfasst werden.

Es kann auf Basis der Sensordaten der Sensoreinheit 150, d.h. auf Basis des erfassten Test-Druckbildes 200, für jede einzelne Düse 21, 22 überprüft werden, ob die jeweilige Düse 21, 22 beeinträchtigt ist oder nicht. Insbesondere kann z.B. erkannt werden, dass in dem gedruckten Test-Druckbild 200 eine bestimmte Linie 202 fehlt. Daraus kann geschlossen werden, dass die der bestimmten Linie 202 entsprechende Düse 21, 22 ausgefallen ist. In entsprechender Weise kann bei Fehlen von mehreren Linien 202 in dem erfassten Test-Druckbild 200 der Ausfall von mehreren Düsen 21, 22 erkannt werden. Ferner können die einzelnen ausgefallenden Düsen 21, 22 identifiziert werden.

Das Test-Druckbild 200 kann wiederholt gedruckt werden, z.B. mit einer bestimmten Wiederholrate. So kann an einer Sequenz von aufeinanderfolgenden Zeitpunkten jeweils die Anzahl von ausgefallenen Düsen 21, 22 ermittelt werden. Ferner können jeweils die einzelnen Düsen 21, 22 identifiziert werden, die ausgefallen sind.

Die Verarbeitungseinheit 101 der Druckvorrichtung 100 kann eingerichtet sein, ein oder mehrere Kompensationsmaßnahmen für die ein oder mehreren ausgefallenen Düsen 21, 22 zu bewirken, insbesondere um die Beeinträchtigung der Druckqualität aufgrund der ein oder mehreren ausgefallenen Düsen 21, 22 zu reduzieren. Im Rahmen einer Kompensationsmaßnahme für eine ausgefallene Düse 21, 22 kann z.B. eine benachbarte Düse 21, 22 der ausgefallenen Düse 21, 22 veranlasst werden, z.B. durch Erhöhung der von der benachbarten Düse 21, 22 ausgestoßenen Tintenmenge, die von der ausgefallenen Düse 21, 22 bewirkte Lücke in einem Druckbild zu schließen.

Die Effektivität der ein oder mehreren Kompensationsmaßnahmen ist typischerweise an ein oder mehrere Randbedingungen gebunden. Beispielhafte Randbedingungen sind,
- eine Bedingung dahingehend, dass die Gesamtanzahl von ausgefallenen Düsen 21, 22 eine maximal zulässige Anzahl von Düsenausfällen nicht übersteigt; und/oder
- eine Bedingung dahingehend, dass die Dichte von ausgefallenen Düsen 21, 22 in unterschiedlichen Teilbereichen des Druckriegels 102, d.h. für
unterschiedliche Teilmengen der Düsen 21, 22, eine maximal zulässige Ausfall-Dichte nicht übersteigt.

Wenn die ein oder mehreren Randbedingungen für die Effektivität der Kompensationsmaßnahmen nicht mehr erfüllt sind, ist typischerweise eine Wartungssituation eingetreten, bei der der Druckbetrieb der Druckvorrichtung 100 unterbrochen werden muss, und bei der eine Regenerierung der ein oder mehreren Druckköpfe 103 des Druckriegel 102 durchgeführt werden muss. Im Rahmen der Regenerierung können die Düsen 21, 22 der ein oder mehreren Druckköpfe 103 eines Druckriegels 102 mit Tinte gespült werden. Ferner können die Düsenplatten der ein oder mehreren Druckköpfe 103 gereinigt und/oder abgewischt werden.

Die Unterbrechung des Druckbetriebs während eines laufenden Druckauftrags kann zu einer Beeinträchtigung der Druckeffizienz und/oder der Druckqualität der Druckvorrichtung 100 führen. Die Verarbeitungseinheit 101 der Druckvorrichtung 100 kann eingerichtet sein, auf Basis der Analyse einer zeitlichen Sequenz von Test-Druckbildern 200 eine vorausliegende Wartungssituation der Druckvorrichtung 100 zu prädizieren, bei der die ein oder mehreren Randbedingungen für die Effektivität der Kompensationsmaßnahmen nicht mehr erfüllt sind. Die vorausliegende Wartungssituation kann bereits prädiziert werden, bevor die Wartungssituation tatsächlich eingetreten ist. Insbesondere kann ausgehend von einem Prädiktionszeitpunkt, an dem die Prädiktion durchgeführt wird, die verbleibende Zeitdauer bis zu dem voraussichtlichen Auftreten einer Wartungssituation prädiziert werden.

Das Prädizieren einer vorausliegenden Wartungssituation und der voraussichtlichen Zeitdauer bis zum Auftreten der Wartungssituation ermöglicht es, den Betrieb der Druckvorrichtung 100 derart zu steuern, dass während des Drucks eines Druckauftrags, zumindest mit einer relativ hohen Wahrscheinlichkeit, keine Wartungssituation auftreten wird. Die Regenerierung der ein oder mehreren Druckköpfe 103 des Druckriegels 102 kann dann in geplanter Weise zwischen zwei unterschiedlichen Druckaufträgen bewirkt werden. So können die Druckqualität und die Druckeffizienz erhöht werden.

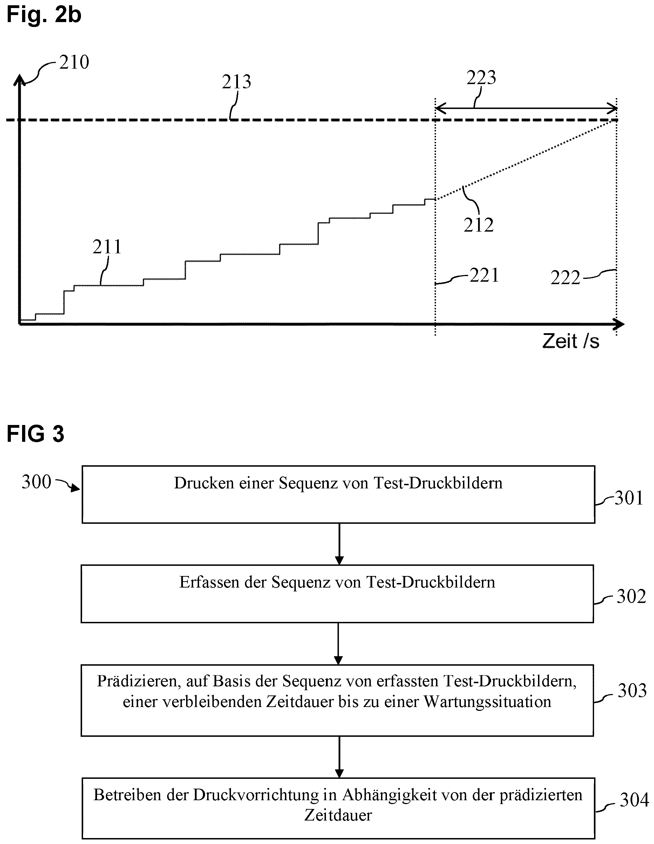

Wie beispielhaft in Fig. 2b dargestellt, kann die Verarbeitungseinheit 101 eingerichtet sein, auf Basis der einzelnen Test-Druckbilder 200 jeweils die Anzahl 210 von ausgefallenen Düsen 21, 22 des Druckriegels 102 an dem jeweiligen Zeitpunkt zu ermitteln. Auf Basis der Sequenz von Test-Druckbildern 200 kann somit ein zeitlicher Verlauf 211 der Anzahl 210 von ausgefallenen Düsen 21, 22 ermittelt werden. Der zeitliche Verlauf 211 kann z.B. für einen Zeitraum von einer Stunde oder mehr, oder von 24 Stunden oder mehr ermittelt werden.

An einem Prädiktionszeitpunkt 221 kann auf Basis des gemessenen zeitlichen Verlaufs 211 der Anzahl 210 von ausgefallenen Düsen 21, 22 der verbleibende Zeitraum 223, d.h. die verbleibende Zeitdauer, prädiziert werden, bis die Anzahl 210 von ausgefallenen Düsen 21, 22 voraussichtlich einen bestimmten Anzahl-Schwellenwert 213, d.h. die maximal zulässige Anzahl von Düsenausfällen, erreicht. Es kann somit der Zeitpunkt 222 prädiziert werden, an dem voraussichtlich eine Wartungssituation eintreten wird. Zu diesem Zweck kann der gemessene zeitliche Verlauf 211 der Anzahl 210 von ausgefallenen Düsen 21, 22 extrapoliert werden, um ausgehend von dem Prädiktionszeitpunkt 221 einen extrapolierten Verlauf 212 der Anzahl 210 von ausgefallenen Düsen 21, 22 zu ermitteln. Der Zeitpunkt an dem der extrapolierte Verlauf 212 den Anzahl-Schwellenwert 213 erreicht kann als voraussichtlicher Wartungszeitpunkt 222 betrachtet werden, an dem die Wartungssituation eintritt.

Es kann somit die Anzahl 210 der fehlerhaften Düsen 21, 22 überwacht werden, indem ein Test-Druckbild 200 auf den Anfang einer Seite, integriert in eine Seite oder auf eine separate Seite gedruckt wird. Das Test-Druckbild 200 kann sensorisch erfasst werden (z.B. durch eine Kamera), und von einem Algorithmus ausgewertet werden, insbesondere um jeweils die Anzahl 210 der fehlerhaften Düsen 21, 22 zu ermitteln.

Durch die Speicherung und Überwachung der Menge, des Anstiegs der Menge und ggf. der Positionen der fehlerhaften Düsen 21, 22 kann ein Regressionsmodell erstellt werden, um die Tendenz der Entwicklung von fehlerhaften Düsen 21, 22 zu analysieren und zu extrapolieren. Mit diesem Algorithmus kann der Zeitpunkt 222, an dem die Grenze 213 der kompensierbaren Düsenausfälle erreicht wird, im Voraus vorhergesagt werden. Dies ermöglicht es, den Wartungsvorgang zur Regenerierung des Druckriegels 102 besser zu planen. Beispielsweise kann ein Druckauftrag vollständig beendet werden oder es kann ein definierter Endpunkt für den Druckbetrieb gewählt werden. So kann vermieden werden, dass unvollständig gedruckte Druckaufträge neu gedruckt werden müssen.

Da das Erreichen der Grenze 213 kompensierbarer Düsenausfälle vorhergesagt werden kann, kann bewirkt werden, dass ein kritischer Wert von Düsenausfällen, der die Druckqualität negativ beeinflussen würde, gar nicht erreicht wird. Der Stopp- und Wartungsvorgang kann in den Druckprozess eingeplant werden, sodass die Produktivität der Druckvorrichtung 100 möglichst wenig beeinträchtigt wird. Ferner können Druckkosten für Tinte und Makulatur reduziert werden. Des Weiteren kann die Kontrolle in der Produktionsplanung verbessert werden.

Es wird somit eine Verarbeitungseinheit 101 für eine Tintenstrahl-Druckvorrichtung 100 beschrieben, die zumindest einen Druckriegel 102 mit einer Vielzahl von Düsen 21, 22 umfasst. Die Vielzahl von Düsen 21, 22 ist eingerichtet, Bildpunkte in einer entsprechenden Vielzahl von Spalten 31, 32 eines Druckbildes auf einen Aufzeichnungsträger 120 zu drucken.

Die Verarbeitungseinheit 101 ist eingerichtet, den Druckriegel 102 zu veranlassen, an einer Sequenz von aufeinanderfolgenden Zeitpunkten eine entsprechende Sequenz von Test-Druckbildern 200 auf einen Aufzeichnungsträger 120 zu drucken. Die einzelnen Test-Druckbilder 200 können jeweils eine Vielzahl von Linien 201 für die entsprechende Vielzahl von Düsen 21, 22 in der entsprechenden Vielzahl von unterschiedlichen Spalten 31, 32 aufweisen.

Die Verarbeitungseinheit 101 ist ferner eingerichtet, die auf den Aufzeichnungsträger 120 gedruckten Test-Druckbilder 200 jeweils sensorisch mit der Sensoreinheit 150 der Druckvorrichtung 100 zu erfassen, um eine Sequenz von erfassten Test-Druckbildern 200 bereitzustellen. Die Sequenz von erfassten Test-Druckbilder 200 kann dann, z.B. unter Verwendung eines digitalen Bildanalyse-Algorithmus, analysiert werden, insbesondere um ein oder mehrere fehlerhafte, etwa ausgefallene, Düsen 21, 22 zu erkennen und/oder um den zeitlichen Anstieg von fehlerhaften Düsen 21, 22 zu ermitteln. Zu diesem Zweck kann die Verarbeitungseinheit 101 eingerichtet sein, zu erkennen, dass in einem erfassten Test-Druckbild 200 zumindest eine der Vielzahl von Linien 201 fehlt. Basierend auf dem Erkennen kann bestimmt werden, dass die der fehlenden Linie 202 entsprechende Düse 21, 22 fehlerhaft ist. In entsprechender Weise können ggf. mehrere fehlerhaften Düsen 21, 22 erkannt und identifiziert werden.

Des Weiteren ist die Verarbeitungseinheit 101 eingerichtet, auf Basis der Sequenz von erfassten Test-Druckbildern 200 die verbleibende Zeitdauer 223 bis zum Vorliegen einer Wartungssituation zu prädizieren, bei der eine Wartung des Druckriegels 102 durchzuführen ist. Eine Wartungssituation kann vorliegen, wenn, insbesondere sobald, eine vordefinierte Anzahl und/oder ein vordefinierter Anteil von Düsen 21, 22 aus der Vielzahl von Düsen 21, 22 fehlerhaft ist. Alternativ oder ergänzend kann eine Wartungssituation vorliegen, wenn, insbesondere sobald, die ein oder mehreren Randbedingungen für die Effektivität der ein oder mehreren Kompensationsmaßnahmen zur Kompensation von fehlerhaften Düsen 21, 22 nicht mehr erfüllt sind.

Die Wartung des Druckriegels 102 kann das Spülen der Vielzahl von Düsen 21, 22 mit Tinte und/oder das Reinigen und/oder Wischen der Düsenplatten der ein oder mehreren Druckköpfe 103 des Druckriegels 102 umfassen.

Es kann auf Basis der Sequenz von erfassten Test-Druckbildern 200 analysiert werden, wie sich die Menge von fehlerhaften Düsen 21, 22 des Druckriegels 102 mit der Zeit entwickelt. Basierend darauf kann die verbleibende Zeitdauer 223 bis zum Vorliegen einer Wartungssituation prädiziert werden, wobei bei Vorliegen einer Wartungssituation der Druckbetrieb zur Wartung des Druckriegels 102 unterbrochen werden muss, typischerweise unverzüglich, sobald erkannt wird, dass eine Wartungssituation vorliegt.

Die Verarbeitungseinheit 101 ist ferner eingerichtet, die Druckvorrichtung 100 in Abhängigkeit von der prädizierten verbleibenden Zeitdauer 223 zu betreiben. Dabei kann insbesondere ein Druckauftrag für die Druckvorrichtung 100 in Abhängigkeit von der prädizierten verbleibenden Zeitdauer 223 bis zu der Wartungssituation ausgewählt werden, insbesondere derart, dass ein Druckauftrag ausgewählt wird, der eine Bearbeitungszeit bis zum Abschluss des Druckauftrags aufweist, die kleiner als die prädizierte verbleibende Zeitdauer 223 ist. So kann mit relativ hoher Wahrscheinlichkeit sichergestellt werden, dass der ausgewählte Druckauftrag vor Erreichen der Wartungssituation abgeschlossen werden kann. Als Folge daraus können die Druckeffizienz und die Druckqualität der Druckvorrichtung 100 erhöht werden.

Es wird somit eine Verarbeitungseinheit 101 für eine Tintenstrahl-Druckvorrichtung 100 beschrieben, die eingerichtet ist, auf Basis einer zeitlichen Sequenz von Test-Druckbildern 200, aus denen die zeitliche Entwicklung der Anzahl 210 von fehlerhaften Düsen 21, 22 hervorgeht, die verbleibende Zeitdauer 223 bis zum Vorliegen einer Wartungssituation zu prädizieren. Die Druckvorrichtung 100 kann dann in optimierter Weise unter Berücksichtigung der prädizierten Zeitdauer 223 betrieben werden.

Die Verarbeitungseinheit 101 kann eingerichtet sein, für den Druck eines Nutz-Druckbildes, z.B. im Rahmen eines Druckauftrags, ein oder mehrere Kompensationsmaßnahmen zu bewirken, die darauf ausgerichtet sind, die Auswirkung einer oder mehrerer fehlerhafter Düsen 21, 22 auf die Druckqualität des Nutz-Druckbildes zu reduzieren. Des Weiteren kann die Verarbeitungseinheit 101 eingerichtet sein, die ein oder mehreren Kompensationsmaßnahmen für den Druck der einzelnen Test-Druckbilder 200 zu unterbinden. So können fehlerhafte Düsen 21, 22 in besonders zuverlässiger Weise auf Basis der einzelnen Test-Druckbilder 200 erkannt werden.

Die Verarbeitungseinheit 101 kann eingerichtet sein, auf Basis der einzelnen erfassten Test-Druckbilder 200 der Sequenz von erfassten Test-Druckbildern 200 jeweils die Anzahl 210 von fehlerhaften Düsen 21, 22 an dem jeweiligen Zeitpunkt zu ermitteln, um einen zeitlichen Verlauf 211 der Anzahl 210 von fehlerhaften Düsen 21, 22 bereitzustellen. Die verbleibende Zeitdauer 223 bis zu der Wartungssituation kann dann auf Basis des zeitlichen Verlaufs 211 der Anzahl 210 von fehlerhaften Düsen 21, 22 prädiziert werden.

Die Verarbeitungseinheit 101 kann insbesondere eingerichtet sein, den zeitlichen Verlauf 211 der Anzahl 210 von fehlerhaften Düsen 21, 22 in die Zukunft zu extrapolieren, insbesondere unter Verwendung einer Regressionsmethode, um einen extrapolierten Verlauf 212 der Anzahl 210 von fehlerhaften Düsen 21, 22 zu ermitteln. Ferner kann der Zeitpunkt 222 ermittelt werden, an dem der extrapolierte Verlauf 212 der Anzahl 210 von fehlerhaften Düsen 21, 22 einen vordefinierten Anzahl-Schwellenwert 213 erreicht und/oder schneidet. Dabei kann der Anzahl-Schwellenwert 213 der maximal zulässigen Anzahl von fehlerhaften Düsen 21, 22 entsprechen.

Die verbleibende Zeitdauer 223 bis zu der Wartungssituation kann dann in besonders präziser und robuster Weise auf Basis des ermittelten Zeitpunkts 222, insbesondere als die verbleibende Zeitdauer bis zu dem ermittelten Zeitpunkt 222, ermittelt werden.

Die Verarbeitungseinheit 101 kann eingerichtet sein, auf Basis der einzelnen erfassten Test-Druckbilder 200 der Sequenz von erfassten Test-Druckbildern 200 jeweils ein Fehlermuster von fehlerhaften Düsen 21, 22 innerhalb der Vielzahl von Düsen 21, 22 des Druckriegels 102 zu ermitteln, um eine zeitliche Sequenz von Fehlermustern bereitzustellen. Das Fehlermuster kann die zwei dimensionale Struktur der Anordnung der Vielzahl von Düsen 21, 22 des Druckriegels 102 aufweisen. Des Weiteren kann das Fehlermuster die ein oder mehreren fehlerhaften Düsen 21, 22 innerhalb der Anordnung der Vielzahl von Düsen 21, 22 des Druckriegels 102 angeben. Das Fehlermuster kann somit in Form eines zweidimensionalen Bildes anzeigen, wo die einzelnen fehlerhaften Düsen 21, 22 innerhalb der Anordnung der Vielzahl von Düsen 21, 22 des Druckriegels 102 angeordnet sind.

Die verbleibende Zeitdauer 223 bis zu der Wartungssituation kann dann in besonders präziser Weise auf Basis der zeitlichen Sequenz von Fehlermustern von fehlerhaften Düsen 21, 22 prädiziert werden. Zu diesem Zweck können die einzelnen Fehlermuster bildlich analysiert werden. Ferner können ein oder mehrere Referenz-Fehlermuster betrachtet werden, die jeweils einer Wartungssituation entsprechen. Es kann dann auf Basis der zeitlichen Entwicklung der Fehlermuster die verbleibende Zeitdauer prädiziert werden, bis sich ein Fehlermuster ergeben wird, das einem Referenz-Fehlermuster für eine Wartungssituation entspricht.

Durch die Berücksichtigung der zeitlichen Entwicklung der Anordnung der fehlerhaften Düsen 21, 22 kann die verbleibende Zeitdauer bis zu einer Wartungssituation in besonders präziser Weise prädiziert werden.

Die Verarbeitungseinheit 101 kann eingerichtet sein, auf Basis der einzelnen erfassten Test-Druckbilder 200 der Sequenz von erfassten Test-Druckbildern 200 jeweils eine örtliche Verteilung der Dichte von fehlerhaften Düsen 21, 22 innerhalb der Anordnung von Düsen 21, 22 zu ermitteln, um eine zeitliche Sequenz der örtlichen Verteilung der Dichte von fehlerhaften Düsen 21, 22 bereitzustellen. Die Dichte kann für einen Teilbereich bzw. für eine Teilmenge von Düsen 21, 22 jeweils den Anteil der fehlerhaften Düsen 21, 22 in dem jeweiligen Teilbereich bzw. in der jeweiligen Teilmenge von Düsen 21, 22 angeben. Es kann somit auf Basis der zeitlichen Sequenz der örtlichen Verteilung der Dichte von fehlerhaften Düsen 21, 22 für eine Vielzahl von unterschiedlichen Teilmengen bzw. Teilbereichen von Düsen 21, 22 aus der Vielzahl von Düsen 21, 22 jeweils ein zeitlicher Verlauf der Dichte von fehlerhaften Düsen 21, 22 in der jeweiligen Teilmenge bzw. in dem jeweiligen Teilbereich von Düsen 21, 22 ermittelt werden.

Die verbleibende Zeitdauer 223 bis zu der Wartungssituation kann dann in besonders präziser Weise auf Basis der zeitlichen Sequenz der örtlichen Verteilung der Dichte von fehlerhaften Düsen 21, 22 prädiziert werden. Die Verarbeitungseinheit 101 kann insbesondere eingerichtet sein, die Vielzahl von zeitlichen Verläufen der Dichte von fehlerhaften Düsen 21, 22 in der entsprechenden Vielzahl von Teilmengen bzw. Teilbereichen von Düsen 21, 22 in die Zukunft zu extrapolieren. Ferner kann ein Zeitpunkt ermittelt werden, an dem ein erster, d.h. ein frühester, der Vielzahl von extrapolierten zeitlichen Verläufen der Dichte von fehlerhaften Düsen 21, 22 einen vordefinierten Dichte-Schwellenwert erreicht und/oder schneidet. Die verbleibende Zeitdauer 223 bis zu der Wartungssituation kann dann in besonders präziser Weise auf Basis des ermittelten Zeitpunkts, insbesondere als die verbleibende Zeitdauer bis zu dem ermittelten Zeitpunkt, ermittelt werden.

Gemäß einem weiteren Aspekt wird eine Tintenstrahl-Druckvorrichtung 100 beschrieben, die die in diesem Dokument beschriebene Verarbeitungseinheit 101 umfasst.

Fig. 3 zeigt ein Ablaufdiagramm eines beispielhaften Verfahrens 300 zum Betrieb einer Tintenstrahl-Druckvorrichtung 100. Die Tintenstrahl-Druckvorrichtung 100 umfasst zumindest einen Druckriegel 102 mit einer Vielzahl von Düsen 21, 22. Die Düsen 21, 22 des Druckriegels 102 können in ein oder mehreren Druckköpfen 103 angeordnet sein. Die Vielzahl von Düsen 21, 22 kann 1000 oder mehr Düsen 21, 22 umfassen. Die Vielzahl von Düsen 21, 22 kann eingerichtet sein, Bildpunkte in einer entsprechenden Vielzahl von Spalten 31, 32 eines Druckbildes auf einen Aufzeichnungsträger 120 zu drucken. Dabei kann zwischen den einzelnen Düsen 21, 22 und den einzelnen Spalten 31, 32 jeweils eine Eins-zu-Eins-Beziehung bestehen, sodass jeder Düse 21, 22 jeweils genau eine Spalte 31, 32 zugeordnet ist, und sodass jeder Spalte 31, 32 jeweils genau eine Düse 21, 22 zugeordnet ist.

Das Verfahren 300 umfasst das Bewirken 301, dass der Druckriegel 102 an einer Sequenz von aufeinanderfolgenden Zeitpunkten eine entsprechende Sequenz von Test-Druckbildern 200 auf den Aufzeichnungsträger 120 druckt. Beispielsweise können mit einer Periodizität von 1 Test-Druckbild 200 pro Q Seiten des Aufzeichnungsträgers 120 Test-Druckbilder 200 gedruckt werden, wobei Q≥1 ist.

Das Verfahren 300 umfasst ferner das Erfassen 302 der auf den Aufzeichnungsträger 120 gedruckten Test-Druckbilder 200, um eine Sequenz von erfassten Test-Druckbildern 200 bereitzustellen. Die einzelnen Test-Druckbilder 200 können anhand der Sensoreinheit 150 der Druckvorrichtung 100 erfasst werden, die z.B. eine Kamera umfasst.

Des Weiteren umfasst das Verfahren 300 das Prädizieren 303, auf Basis der Sequenz von erfassten Test-Druckbildern 200, einer verbleibenden Zeitdauer 223 bis zu einer Wartungssituation, bei der eine Wartung des Druckriegels 102 durchzuführen ist. Zu diesem Zweck kann die Sequenz von erfassten Test-Druckbildern 200 analysiert werden, um die zeitliche Entwicklung von fehlerhaften Düsen 21, 22 zu ermitteln. Die verbleibende Zeitdauer 223 bis zu der Wartungssituation kann dann auf Basis der zeitlichen Entwicklung von fehlerhaften Düsen 21, 22 prädiziert werden.

Das Verfahren 300 umfasst ferner das Betreiben 304 der Druckvorrichtung 100 in Abhängigkeit von der prädizierten verbleibenden Zeitdauer 223. Dabei können insbesondere ein oder mehrere Druckaufträge und/oder die Reihenfolge der Druckaufträge, die von der Druckvorrichtung 100 bearbeitet werden, in Abhängigkeit von der prädizierten verbleibenden Zeitdauer 223 ausgewählt bzw. festgelegt werden. So können die Druckeffizienz und die Druckgüte der Druckvorrichtung 100 erhöht werden.

### Bezugszeichenliste

- 1: Transportrichtung
- 2: Querrichtung
- 21, 22: Düse
- 31, 32: Spalte
- 100: Druckvorrichtung
- 101: Steuer- bzw. Verarbeitungseinheit
- 102: Druckriegel
- 103: Druckkopf
- 120: Aufzeichnungsträger
- 140: Druckwerk
- 150: Sensoreinheit
- 200: Test-Druckbild (Testmuster)
- 201: gedruckte Linie
- 202: fehlende Linie
- 210: Anzahl von fehlerhaften Düsen
- 211: gemessener zeitlicher Verlauf der Anzahl von fehlerhaften Düsen
- 212: extrapolierter zeitlicher Verlauf der Anzahl von fehlerhaften Düsen
- 213: Anzahl-Schwellenwert
- 221: Prädiktionszeitpunkt
- 222: prädizierter Wartungszeitpunkt
- 223: verbleibende Zeitdauer bis zu einer Wartungssituation
- 300: Verfahren zum Betrieb einer Tintenstrahl-Druckvorrichtung
- 301-304: Verfahrensschritte

## Patentansprüche

1. Verarbeitungseinheit (101) für eine Tintenstrahl-Druckvorrichtung (100), die zumindest einen Druckriegel (102) mit einer Vielzahl von Düsen (21, 22) umfasst; wobei die Vielzahl von Düsen (21, 22) eingerichtet ist, Bildpunkte in einer entsprechenden Vielzahl von Spalten (31, 32) eines Druckbildes auf einen Aufzeichnungsträger (120) zu drucken; wobei die Verarbeitungseinheit (101) eingerichtet ist,
- den Druckriegel (102) zu veranlassen, an einer Sequenz von aufeinanderfolgenden Zeitpunkten eine entsprechende Sequenz von Test-Druckbildern (200) auf den Aufzeichnungsträger (120) zu drucken;
- die auf den Aufzeichnungsträger (120) gedruckten Test-Druckbilder (200) jeweils sensorisch zu erfassen, um eine Sequenz von erfassten Test-Druckbildern (200) bereitzustellen;
- auf Basis der Sequenz von erfassten Test-Druckbildern (200) eine verbleibende Zeitdauer (223) bis zu einer Wartungssituation zu prädizieren, bei der eine Wartung des Druckriegels (102) durchzuführen ist; und
- die Druckvorrichtung (100) in Abhängigkeit von der prädizierten verbleibenden Zeitdauer (223) zu betreiben.

2. Verarbeitungseinheit (101) gemäß Anspruch 1, wobei die Verarbeitungseinheit (101) eingerichtet ist,
- auf Basis der einzelnen erfassten Test-Druckbilder (200) der Sequenz von erfassten Test-Druckbildern (200) jeweils eine Anzahl (210) von fehlerhaften Düsen (21, 22) zu ermitteln, um einen zeitlichen Verlauf (211) der Anzahl (210) von fehlerhaften Düsen (21, 22) bereitzustellen; und
- die verbleibende Zeitdauer (223) bis zu der Wartungssituation auf Basis des zeitlichen Verlaufs (211) der Anzahl (210) von fehlerhaften Düsen (21, 22) zu prädizieren.

3. Verarbeitungseinheit (101) gemäß Anspruch 2, wobei die Verarbeitungseinheit (101) eingerichtet ist,
- den zeitlichen Verlauf (211) der Anzahl (210) von fehlerhaften Düsen (21, 22) in die Zukunft zu extrapolieren, insbesondere unter Verwendung einer Regressionsmethode, um einen extrapolierten Verlauf (212) der Anzahl (210) von fehlerhaften Düsen (21, 22) zu ermitteln;
- einen Zeitpunkt (222) zu ermitteln, an dem der extrapolierte Verlauf (212) der Anzahl (210) von fehlerhaften Düsen (21, 22) einen vordefinierten Anzahl-Schwellenwert (213) erreicht und/oder schneidet; und
- die verbleibende Zeitdauer (223) bis zu der Wartungssituation auf Basis des ermittelten Zeitpunkts (222), insbesondere als die verbleibende Zeitdauer bis zu dem ermittelten Zeitpunkt (222), zu ermitteln.

4. Verarbeitungseinheit (101) gemäß einem der vorhergehenden Ansprüche, wobei die Verarbeitungseinheit (101) eingerichtet ist, einen Druckauftrag für die DruckVorrichtung (100) in Abhängigkeit von der prädizierten verbleibenden Zeitdauer (223) bis zu der Wartungssituation auszuwählen, insbesondere derart, dass ein Druckauftrag ausgewählt wird, der eine Bearbeitungszeit bis zum Abschluss des Druckauftrags aufweist, die kleiner als die prädizierte verbleibende Zeitdauer (223) ist.

5. Verarbeitungseinheit (101) gemäß einem der vorhergehenden Ansprüche, wobei
- das Test-Druckbild (200) eine Vielzahl von Linien (201) für die entsprechende Vielzahl von Düsen (21, 22) in der entsprechenden Vielzahl von unterschiedlichen Spalten (31, 32) aufweist; und
- die Verarbeitungseinheit (101) eingerichtet ist,
- zu erkennen, dass in einem erfassten Test-Druckbild (200) eine der Vielzahl von Linien (201) fehlt; und
- basierend auf dem Erkennen zu bestimmen, dass die der fehlenden Linie (202) entsprechende Düse (21, 22) fehlerhaft ist.

6. Verarbeitungseinheit (101) gemäß einem der vorhergehenden Ansprüche, wobei die Verarbeitungseinheit (101) eingerichtet ist,
- für den Druck eines Nutz-Druckbildes ein oder mehrere Kompensationsmaßnahmen zu bewirken, die darauf gerichtet sind, eine Auswirkung einer fehlerhaften Düse (21, 22) auf eine Druckqualität des Nutz-Druckbildes zu reduzieren; und
- die ein oder mehreren Kompensationsmaßnahmen für den Druck eines Test-Druckbildes (200) zu unterbinden.

7. Verarbeitungseinheit (101) gemäß einem der vorhergehenden Ansprüche, wobei
- eine Wartungssituation vorliegt, wenn, insbesondere sobald, eine vordefinierte Anzahl und/oder ein vordefinierter Anteil von Düsen (21, 22) aus der Vielzahl von Düsen (21, 22) fehlerhaft ist; und/oder
- die Wartung des Druckriegels (102) ein Spülen der Vielzahl von Düsen (21, 22) mit Tinte und/oder ein Reinigen und/oder Wischen einer Düsenplatte des Druckriegels (102) umfasst.

8. Verarbeitungseinheit (101) gemäß einem der vorhergehenden Ansprüche, wobei die Verarbeitungseinheit (101) eingerichtet ist,
- auf Basis der einzelnen erfassten Test-Druckbilder (200) der Sequenz von erfassten Test-Druckbildern (200) jeweils ein Fehlermuster von fehlerhaften Düsen (21, 22) innerhalb der Vielzahl von Düsen (21, 22) des Druckriegels (102) zu ermitteln, um eine zeitliche Sequenz von Fehlermustern bereitzustellen; und
- die verbleibende Zeitdauer (223) bis zu der Wartungssituation auf Basis der zeitlichen Sequenz von Fehlermustern von fehlerhaften Düsen (21, 22) zu prädizieren.

9. Verarbeitungseinheit (101) gemäß einem der vorhergehenden Ansprüche, wobei die Verarbeitungseinheit (101) eingerichtet ist,
- auf Basis der einzelnen erfassten Test-Druckbilder (200) der Sequenz von erfassten Test-Druckbildern (200) jeweils eine örtliche Verteilung einer Dichte von fehlerhaften Düsen (21, 22) zu ermitteln, um eine zeitliche Sequenz der örtlichen Verteilung der Dichte von fehlerhaften Düsen (21, 22) bereitzustellen; und
- die verbleibende Zeitdauer (223) bis zu der Wartungssituation auf Basis der zeitlichen Sequenz der örtlichen Verteilung der Dichte von fehlerhaften Düsen (21, 22) zu prädizieren.

10. Verfahren (300) zum Betrieb einer Tintenstrahl-Druckvorrichtung (100), die zumindest einen Druckriegel (102) mit einer Vielzahl von Düsen (21, 22) umfasst; wobei die Vielzahl von Düsen (21, 22) eingerichtet ist, Bildpunkte in einer entsprechenden Vielzahl von Spalten (31, 32) eines Druckbildes auf einen Aufzeichnungsträger (120) zu drucken; wobei das Verfahren (300) umfasst,
- Bewirken (301), dass der Druckriegel (102) an einer Sequenz von aufeinanderfolgenden Zeitpunkten eine entsprechende Sequenz von Test-Druckbildern (200) auf den Aufzeichnungsträger (120) druckt;
- Erfassen (302) der auf den Aufzeichnungsträger (120) gedruckten Test-Druckbilder (200), um eine Sequenz von erfassten Test-Druckbildern (200) bereitzustellen;
- Prädizieren (303), auf Basis der Sequenz von erfassten Test-Druckbildern (200), einer verbleibenden Zeitdauer (223) bis zu einer Wartungssituation, bei der eine Wartung des Druckriegels (102) durchzuführen ist; und
- Betreiben (304) der Druckvorrichtung (100) in Abhängigkeit von der prädizierten verbleibenden Zeitdauer (223).
